# EUROPÄISCHE PATENTSCHRIFT

(11) **EP 0 641 481 B1**
(45) Veröffentlichungstag und Bekanntmachung des Hinweises auf die Patenterteilung: **04.11.1998**
(21) Anmeldenummer: 94906845.6
(22) Anmeldetag: 08.02.1994
(51) Int. Cl.: H01F 7/18

(54) **STEUERSCHALTUNG FÜR EIN MAGNETVENTIL**
CONTROL CIRCUIT FOR A MAGNETIC VALVE
CIRCUIT DE COMMANDE POUR ELECTROVANNE

(30) Priorität: 23.02.1993 DE 4305488
(43) Veröffentlichungstag der Anmeldung: 08.03.1995
(73) Patentinhaber: ROBERT BOSCH GMBH, 70442 Stuttgart (DE)
(72) Erfinder: ZECHMANN, Jürgen, D-74081 Heilbronn (DE); DODEN, Berend-Wilhelm, D-71634 Ludwigsburg (DE); WOLF, Michael, D-70806 Kornwestheim (DE); WISS, Helmut, D-71696 Möglingen (DE)
(86) Internationale Anmeldenummer: DE9400124
(87) Internationale Veröffentlichungsnummer: WO9419810

(56) Entgegenhaltungen:
- EP-A- 0 376 493
- DE-A- 4 110 254
- FR-A- 2 242 758

## Beschreibung

### Stand der Technik

Aus der DE-41 10 254 ist bekannt, den Ansteuerstrom beim Ansteuern des Ventils einmal oder mehrere Male zu unterbrechen, um ein sanfteres Schließen des Ventils zu erzielen und störende hydraulische Geräusche zu vermeiden.

Aus der EP-OS 0 376 493 ist eine Steuerung bekannt, bei der der Stromwert zu Beginn auf einen sehr hohen Wert angehoben wird, um den Schaltvorgang zu beschleunigen. Anschließend wird der Strom auf einen Haltestrom abgeregelt, bei dem das Ventil in seiner Stellung verbleibt.

Beim Schalten insbesondere bei der Verwendung in hydraulischen Systemen wie beispielsweise bei ABS-ASR-Systemen treten beim Schalten des Ventils Geräusche auf.

### Aufgabe der Erfindung

Die beim Schalten auftretenden Geräusche sollen reduziert bzw. vermieden werden.

### Vorteile der Erfindung

Durch die erfindungsgemäße Ausbildung des Ansteuerstroms bei der Ventilumschaltung wird einmal ein starkes Aufschlagen des Ventilkörpers am Anschlag vermieden, da der Hub weniger schnell durchfahren wird. Auch werden die sonst beim Öffnen entstehenden hydraulischen Schwingungen nicht erzeugt und somit eine deutliche Minderung der Schallemission erzielt. Dies ist z.B. bei ABS/ASR-Ventilen von besonderem Interesse. Weitere Vorteile können durch die Ausbildung gemäß den Unteransprüchen erzielt werden. So kann mit der Ausbildung gemäß Anspruch 5 die Höhe der folgenden Druckstufe und der Druckänderungsgradient beeinflußt werden.

### Figurenbeschreibung

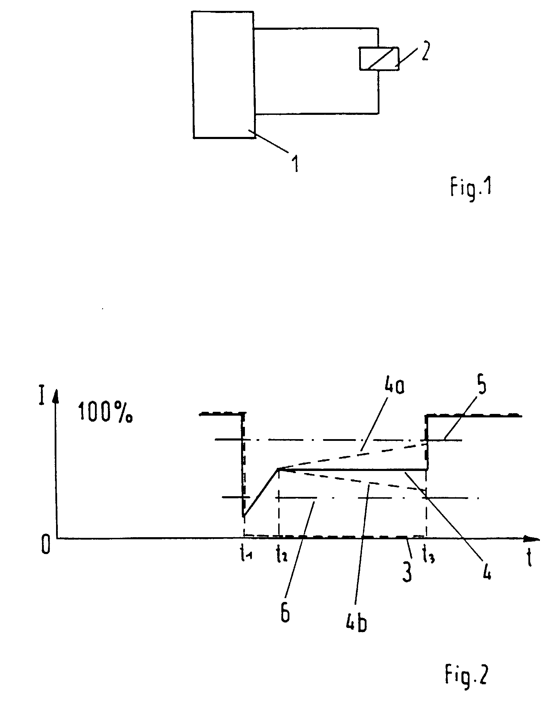

Anhand der Zeichnung wird ein Ausführungsbeispiel der Erfindung erläutert. In Figur 1 ist ein Ansteuerblock mit 1 und ein Magnetventil mit 2 bezeichnet.

Figur 2 zeigt gestrichelt den Verlauf 3 des üblichen Ansteuerstroms zwischen zwei Ansteuerimpulsen. Ausgezogen ist der erfindungsgemäße gesteuerte Ansteuerstrom zwischen den beiden Ansteuerimpulsen gezeigt. In Figur 2 ist strichpunktiert der Ansteuerstromwert 5 eingezeichnet, bei dem das Magnetventil 2 anspricht, und der Ansteuerstromwert 6 eingezeichnet, bei dem das Ventil abfällt. Beim Abschalten des Ventils zum Zeitpunkt t₁ wird hier der Ansteuerstrom nicht auf 0 gefahren, sondern auf einen Wert, der unterhalb des Wertes 6 liegt und z.B. 20-30% der Ansteuerung für die Schließstellung ausmacht. Damit beginnt das Ventil abzufallen. Sofort wird jedoch der Ansteuerstrom 4 wieder in den Bereich zwischen den Stromwerten 5 und 6 rückgesteuert und dort (ab t₂) festgehalten bis das Ventil wieder in die Schließstellung gesteuert werden soll (t₃). Dies bringt die eingangs erwähnten Vorteile. Es ist jedoch auch möglich den Ansteuerstrom entsprechend dem Verlauf 4a langsam ansteigen zu lassen oder entsprechend dem Verlauf 4b langsam abfallen zu lassen.

Der Vorgang wurde anhand von Geraden dargestellt, kann aber auch mit beliebigen Kurvenformen realisiert werden.

## Patentansprüche

1. Steuerung für ein Magnetventil, das sich nach Erreichen eines bestimmten ersten Ansteuerstromwerts von seiner Schließstellung in seine Durchlaßstellung und nach Erreichen eines bestimmten zweiten Ansteuerstromwerts von seiner Durchlaßstellung in seine Schließstellung verstellt und bei dem zusätzlich eine Beeinflussung des Ansteuerstroms erfolgt, dadurch gekennzeichnet, daß beim Umsteuern des Ventils in seine Durchlaßstellung der Ansteuerstrom zuerst kurzzeitig gegenüber der Ansteuerdauer unter den ersten Ansteuerstromwertes und danach in den Bereich zwischen dem ersten und zweiten Ansteuerstromwert gesteuert wird.

2. Steuerung nach Anspruch 1, bei der sich bei maximalem Ansteuerstrom des Ventils in der Schließstellung befindet, dadurch gekennzeichnet, daß der Ansteuerstrom kurzzeitig Null ist.

3. Steuerung nach Anspruch 1, bei der sich bei maximalem Ansteuerstrom das Ventil in seiner Schließstellung befindet, dadurch gekennzeichnet, daß der Ansteuerstrom kurzzeitig in der Größenordnung von 30 % des Ansteuerstroms für die Schließstellung liegt.

4. Steuerung nach einem der Ansprüche 1 bis 3, dadurch gekennzeichnet, daß der Ansteuerstrom zwischen dem ersten und zweiten Ansteuerstromwert konstant gehalten wird.

5. Steuerung nach einem der Ansprüche 1 bis 3, dadurch gekennzeichnet, daß der Steuerstrom nach Rückführung zwischen dem ersten und zweiten Ansteuerstromwert mit einem vorgebbaren kleinen Gradienten verändert wird.

6. Steuerung nach Anspruch 4 oder 5, dadurch gekennzeichnet, daß der Steuerstrom bis zur nächsten Ventilansteuerung zwischen dem ersten und zweiten Ansteuerstromwert gehalten wird.

7. Steuerung nach einem der Ansprüche 1 bis 6, dadurch gekennzeichnet, daß die Ansteuerimpulse pulsweitenmoduliert sind.

## Claims

1. Control for a solenoid valve which, after a specific first actuation current value has been reached, is adjusted from its closed position into its flow position and, after a specific second actuation current value has been reached, is adjusted from its flow position into its closed position and in which, in addition, the actuation current is influenced, characterized in that when the valve is adjusted into its flow position the actuation current is initially briefly, with respect to the actuation period, adjusted beyond the second actuation current value and subsequently adjusted into the range between the first and second actuation current value.

2. Control according to Claim 1 in which the valve is in the closed position when the actuation current is at a maximum, characterized in that the actuation current is briefly zero.

3. Control according to Claim 1 in which the valve is in its position when the actuation current is at a maximum, characterized in that the actuation current is briefly of the order of magnitude of 30% of the actuation current for the closed position.

4. Control according to one of Claims 1 to 3, characterized in that the actuation current is kept constant between the first and second actuation current value.

5. Control according to one of Claims 1 to 3, characterized in that the control current is changed with a predeterminable small gradient after being returned to between the first and second actuation current value.

6. Control according to Claim 4 or 5, characterized in that the control current is kept between the first and second actuation current value until the next actuation of the valve.

7. Control according to one of Claims 1 to 6, characterized in that the actuation pulses are pulse width-modulated.

## Revendications

1. Circuit de commande d'une électrovanne qui, lorsqu'on atteint une première intensité de commande, déterminée, est déplacée de sa position de fermeture à sa position d'ouverture et lorsqu'on atteint une seconde intensité de commande, déterminée, passe de sa position d'ouverture à sa position de fermeture, et selon lequel en outre on influence le courant de commande,
caractérisé en ce que
lorsqu'on commande la commutation de l'électrovanne vers sa position d'ouverture, on commande tout d'abord le courant de commande brièvement pour qu'il soit en dessous de la première intensité de commande par rapport à la durée de commande, puis qu'il soit commandé dans la plage comprise entre la première et la seconde intensité de commande.

2. Circuit de commande selon la revendication 1 selon lequel on a la valeur maximale de l'intensité de commande de l'électrovanne dans la position de fermeture,
caractérisé en ce que
le courant de commande est brièvement égal à zéro.

3. Circuit de commande selon la revendication 1 selon lequel l'électrovanne est dans sa position de fermeture lorsque l'intensité du courant de commande est maximale,
caractérisé en ce que
l'intensité de commande se situe pendant une courte période à un ordre de grandeur de 30 % de l'intensité de commande de la position de fermeture.

4. Circuit de commande selon l'une des revendications 1 à 3,
caractérisé en ce que
l'intensité de commande est maintenue constante entre la première et la seconde valeur de l'intensité de commande.

5. Circuit de commande selon l'une des revendications 1 à 3,
caractérisé en ce que
l'intensité de commande est modifiée selon un petit gradient prédéterminé après le retour, entre la première et la seconde valeur de l'intensité de commande.

6. Circuit de commande selon la revendication 4 ou 5,
caractérisé en ce que
l'intensité de commande est maintenue entre la première et la seconde valeur de l'intensité de commande jusqu'à la commande suivante de l'électrovanne.

7. Circuit de commande selon l'une des revendications 1 à 6,
caractérisé en ce que
les impulsions de commande sont modulées en largeur d'impulsion.
